(19) **Europäisches Patentamt**

**European Patent Office**

**Office européen des brevets**

(11) Publication number: **0 531 028 A2**

# EUROPEAN PATENT APPLICATION

(21) Application number: **92307668.1**

(22) Date of filing: **21.08.92**

(51) Int. Cl.5: **H04H 3/00**, H04B 7/26, H04H 1/00

(30) Priority: **06.09.91 US 755856**

(43) Date of publication of application:
**10.03.93 Bulletin 93/10**

(84) Designated Contracting States:
**AT BE CH DE DK ES FR GB GR IE IT LI NL SE**

(71) Applicant: **GENERAL INSTRUMENT CORPORATION**
**181 West Madison Street**
**Chicago, Illinois 60602(US)**
Applicant: **OUALCOMM INCORPORATED**
**10555 Sorrento Valley Road**
**San Diego, California 92121-1617(US)**

(72) Inventor: **Lee, Chong U.**
**5238 Camino Playa Malago**
**San Diego, California 92124(US)**
Inventor: **Krause, Edward A.**
**5854 Ithaca Place**
**San Diego, California 92122(US)**
Inventor: **Shen, Paul X.**
**10868-167 Aderman Avenue**
**San Diego, California 92126(US)**

(74) Representative: **Blatchford, William Michael et al**
**Withers & Rogers 4 Dyer's Buildings Holborn**
**London EC1N 2JT (GB)**

(54) **Multi-transmitter wide-area cellular broadcast communication system.**

(57) In a broadcast communication system, a plurality of transmitters ($T_1$, $T_2$, ... $T_M$) are located at different locations throughout a broadcast area for separately and synchronously broadcasting a common digital communication signal at a predetermined frequency over different signal paths, and a receiver (10, 12) located within the broadcast area receives the common digital communication signal separately broadcast by a plurality of the transmitters at the predetermined frequency over different signal paths and processes the received signal to reproduce the common digital communication signal without the effects of multipath and other channel distortions. The received signal is modified in relation to the broadcast signal by channel responses of the different signal paths; and the receiver includes an adaptive equalization filter (12) for processing the received signal inversely in accordance with a collection of the channel responses of the different signal paths to reproduce the common digital communication signal without the effects of multipath and other channel distortions. The accuracy of the filter in processing the received signal in accordance with the inverse of the collection of the channel responses of the different signal paths is enhanced by adapting the filter to reproduce a predetermined known common digital communication signal without the effects of multipath and other channel distortions.

FIG. 2

EP 0 531 028 A2

## BACKGROUND OF THE INVENTION

The present invention generally pertains to broadcast communication systems and is particularly directed to an improvement in a wide-area broadcast communication system that enables more thorough use of the overall broadcast frequency spectrum.

In a typical wide-area broadcast communication system, a communication signal is broadcast at a predetermined frequency by a single transmitter to a plurality of receivers located throughout the wide area. The signal is broadcast at relatively high power to assure that receivers located in the fringe regions of the wide area are able to adequately receive the broadcast signal. When a plurality of such wide-area broadcast systems have their transmitters located in adjacent wide areas, the different transmitters broadcast at different predetermined frequencies, which are separated by a guard band, in order to prevent receivers located in the fringe regions of the adjacent areas from simultaneously receiving signals broadcast by more than one transmitter when the receiver is tuned to the predetermined frequency of one of the transmitters.

## SUMMARY OF THE INVENTION

The present invention provides a broadcast communication system that includes a plurality of transmitters at different locations for separately and synchronously broadcasting a common communication signal at a predetermined frequency over different signal paths; and a receiving apparatus for receiving the common communication signal separately broadcast by a plurality of said transmitters at said predetermined frequency over different signal paths and processing the received signal to reproduce the common communication signal without the effects of multipath and other channel distortions.

The received signal is modified in relation to the broadcast signal by channel responses of the different signal paths; and the receiving apparatus preferably includes an equalization filter for processing the received signal inversely in accordance with a collection of the channel responses of the different signal paths to reproduce the common communication signal. In the preferred embodiment, the filter is an adaptive equalization filter; and the receiving apparatus further comprises means for enhancing the accuracy of the filter in processing the received signal in accordance with the inverse of said collection of the channel responses, by adapting the filter to reproduce a predetermined known common communication signal without the effects of multipath and other channel distortions.

The present invention is particularly advantageous for broadcasting digital communication signals over a wide area, since digital signals must be free of distortion from the effects of multipath transmission, such as multipath echos.

In the system of the present invention, the use of a plurality of transmitters throughout the broadcast area eliminates weak reception in the fringe regions of the broadcast area; and the transmitters operate at relatively low power such that fine control can be exercised to define the area of broadcast coverage and also enable a more efficient utilization of the overall broadcast frequency spectrum than utilized by the use of typical single-transmitter, high-power, broadcast systems in adjacent broadcast areas.

Additional features of the present invention are described in relation to the description of the preferred embodiment.

## BRIEF DESCRIPTION OF THE DRAWING

Figure 1 is a block diagram of an exemplary preferred embodiment of a broadcast communication system according to the present invention.

Figure 2 is a block diagram of a preferred embodiment of a receiver receiving a common communication signal from a plurality of transmitters over different signal paths in the broadcast communication system of Figure 1.

## DESCRIPTION OF THE PREFERRED EMBODIMENT

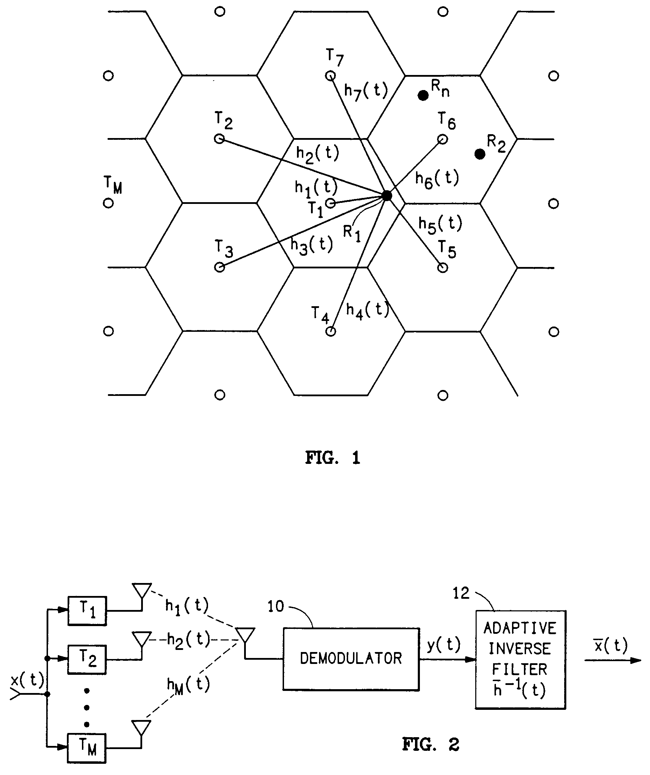

Referring to Figure 1, an exemplary preferred embodiment of a broadcast communication system according to the present invention includes a plurality of transmitters $T_1$, $T_2$, ..., $T_M$ located throughout a broadcast area and a number of receivers $R_1$, $R_2$, ..., $R_n$ at various locations within the broadcast area. The number of transmitters usually is different than the number of receivers.

The broadcast area is divided into a number of adjacent cells $C_1$, $C_2$, ..., $C_M$, with a transmitter $T_1$, $T_2$, ..., $T_M$ being located in each cell. The location and distance between transmitters depend on the geographic constraint and the required performance of a particular broadcasting system. For illustration purposes, hexagonal cells are depicted in the Drawing.

In order to maximize the utilization of the assigned portion of the broadcast frequency spectrum, each transmitter $T_1$, $T_2$, ..., $T_M$ transmits an identical common communication signal $x(t)$ that contains one or more independent data channels (e.g. multiple radio or TV programs) over the same predetermined frequency band at approximately the same time. The independent data channels within the same predetermined frequency band are provided by any of several known multiple access techniques such as FDMA, TDMA, or CDMA. The communication signals may be continuous signals or discrete sampled signals. The communication signal may contain information in either digital or analog format.

Each receiver $R_1$, $R_2$, ..., $R_n$ receives all transmissions of the common communication signal x(t) broadcast from the transmitters located near to the cell in which the receiver is located, (e.g. cells 1 through M). The signal y(t) received by any given receiver is modified in relation to the broadcast signal x(t) by channel responses $h_i(t)$ of the different signal paths 1 through M. For example, in the broadcast area shown Figure 1, the channel response of the signal path between the transmitter $T_6$ and the receiver $R_1$ is $h_6(t)$. Thus, the signal received by the receiver $R_1$ from the transmitter $T_6$ is x(t)*$h_6$(t) where * represents convolution operation {x(t) filtered by $h_6$(t)}. When the receiver $R_1$ receives the common communication signal x(t) broadcast from M nearby transmitters, the signal y-(t) received by the receiver $R_1$ is the sum of the signals transmitted by each of the M transmitters as respectively modified by the channel responses of the M different signal paths:

$$\text{(Eq. 1)} \qquad y(t) \quad = \sum_{i=1}^{M} [x(t) * h_i(t)]$$

The received signal y(t) can be written as:

(Eq.2)  y(t) = x(t)*h(t)

where

$$\text{(Eq. 3)} \qquad h(t) \quad = \sum_{i=1}^{M} h_i(t)$$

is distortion from the effects of multipath channel responses. In some instances the channel response of each signal path can be modeled as a simple delay. In which case, h(t) can be simplified as:

$$\text{(Eq. 4)} \qquad h(t) = \sum_{i=1}^{M} a_i \delta(t - \tau_i)$$

where $a_i$ represents path attenuation and $\delta(t-\tau_i)$ represents a unit impulse delayed by $\tau_i$.

Referring to Figure 2, each receiver $R_1$, $R_2$, ..., $R_n$ includes a demodulator 10 and an adaptive equalization filter 12. The demodulator 10 can be tuned to the predetermined frequency at which the common communication signal is broadcast by the plurality of transmitters $T_1$, $T_2$, ..., $T_n$ to provide the received signal y(t).

The receiver receives the common communication signal x(t) broadcast by M transmitters $T_1$, $T_2$, ..., $T_M$ over M different signal paths having channel responses $h_1$(t), $h_2$(t), ... $h_M$(t), respectively.

Since the same signal x(t) is transmitted by each of the M transmitters, each receiver can recover an estimate $\bar{x}$(t) of the broadcast common communication signal x(t) from y(t) by compensating for the distortion from the effects of multipath transmission h(t). This is achieved by the adaptive equalization filter 12, which processes the received signal y(t) inversely in accordance with a collection the channel responses of the different signal paths to reproduce an estimate $\bar{x}$(t) of the common communication signal x(t) without the effects of multipath and other channel distortions. The adaptive equalization filter 12 applies an approximate inverse filter function $\bar{h}^{-1}$(t) to the received signal y(t) to thereby cancel the effects of multipath transmission h(t). This process is similar to an equalization process that removes multipath echos. Alternatively, there are other means for accomplishing the inverse filter function, as are well known to those skilled in the art.

Because in practice only an approximation of $h^{-1}$(t) can be obtained, the accuracy of the adaptive equalization filter 12 in processing the received signal y(t) in accordance with the inverse of the collection of the channel responses is enhanced by adapting the filter 12 to reproduce a predetermined known common communication signal without the effects of multipath and other channel distortions. The predetermined known communication signal may be a pilot signal or a training sequence. Other well known techniques also may be used for enhancing the accuracy of the adaptation filter 12.

The broadcast communication system of the present invention enables all of the transmitters in the broadcast area to simultaneously broadcast in the same predetermined frequency band without any interference problems. Since each receiver is able to coherently combine signals from the different transmitters, it provides antenna diversity, which increases the effective received power and reduces the severity of channel fading. When combined with a small cell size, the antenna diversity feature enables each transmitter to operate at a very low power level, which is orders of magnitude lower than in a conventional broadcasting system.

The fringe region of marginal reception can be eliminated by selectively adjusting the power of each of the transmitters to provide an adequate margin over thermal noise everywhere in the broadcast area. In addition, the area of coverage can be controlled easily by selective placement of the transmitters, such as only near residential areas.

## Claims

1. A broadcast communication system, characterized by

   a plurality of transmitters ($T_1$, $T_2$, ... $T_M$) at different locations for separately and synchronously broadcasting a common communication signal at a predetermined frequency over different signal paths; and

   a receiving apparatus (10, 12) for receiving the common communication signal separately broadcast by a plurality of said transmitters at said predetermined frequency over different signal paths and processing the received signal to reproduce the common communication signal without the effects of multipath and other channel distortions.

2. A system according to Claim 1, wherein the common communication signal is a digital communication signal.

3. A communication system according to Claims 1 or 2, wherein the received signal is modified in relation to the broadcast signal by channel responses of the different signal paths, characterized by the receiving apparatus comprising

   an equalization filter (12) for processing the received signal inversely in accordance with a collection of the channel responses of the different signal paths to reproduce the common communication signal without the effects of multipath and other channel distortions.

4. A system according to Claim 3, wherein the filter is an adaptive equalization filter, characterized by the receiving apparatus further comprising

   means (12) for enhancing the accuracy of the filter in processing the received signal in accordance with the inverse of said collection of the channel responses, by adapting the filter to reproduce a predetermined known common communication signal without the effects of multipath and other channel distortions.

FIG. 1

FIG. 2